# NEUE EUROPÄISCHE PATENTSCHRIFT

(11) **EP 1 693 320 B2**
(45) Veröffentlichungstag und Bekanntmachung des Hinweises auf die Entscheidung über den Einspruch: **18.12.2013**
(45) Hinweis auf die Patenterteilung: 16.07.2008
(21) Anmeldenummer: 06003229.9
(22) Anmeldetag: 17.02.2006
(51) Int. Cl.: B65G 15/58, B65G 21/20

(54) **Vakuumförderer mit drehender Luftzuführung**
Vacuum conveyor with rotating air intake
Convoyeur à vide avec alimentation en air rotative

(30) Priorität: 18.02.2005 DE 102005007473
(43) Veröffentlichungstag der Anmeldung: 23.08.2006
(73) Patentinhaber: Beer, Christian, 6858 Schwarzach (AT)
(72) Erfinder: Beer, Christian, 6858 Schwarzach (AT)
(74) Vertreter: Riebling, Peter

(56) Entgegenhaltungen:
- DE-A1- 3 714 291
- DE-A1- 3 938 480
- DE-B4- 10 122 032
- DE-C1- 3 706 884
- US-A- 3 908 835
- US-A- 3 942 724
- US-A- 4 495 746

## Beschreibung

Gegenstand der Erfindung ist ein Vakuumförderer mit Luftzuführung nach dem Oberbegriff des Patentanspruches 1.

Ein eingangs genannter Vakuumförderer ist beispielsweise mit dem Gegenstand der DE 101 22 032 B4 bekannt geworden. Bei diesem bekannten Vakuumförderer ist eine Bandfördervorrichtung vorhanden, die zum Transport von plattenförmigen Werkstücken mittels Unterdruck geeignet ist. Hierbei sind über zwei voneinander beabstandete und parallel zueinander verlaufende Umlenkrollen ein Fördergurt drehend angetrieben angeordnet, durch dessen Längserstreckung hindurch querverlaufende Bohrungen angeordnet sind, durch welche Druckluft in zugeordnete und fest mit dem Fördergurt verbundene Saugblöcke eingeführt wird.

Die Unterdruckerzeugung erfolgt hierbei im Bereich des Fördergurtes und die damit erzeugte Saugluft wird über an den Saugblöcken angeordnete Saugmuscheln angelegt, so dass das zu fördernde Fördergut angesaugt und über eine gewisse Förderstrecke gefördert wird.

Nachteilig beim Gegenstand der DE 101 22 032 B4 ist allerdings, dass die Druckluft stellenweise über voneinander beabstandete Abstandsbohrungen auf das Förderband zugeführt wird, wobei also eine Vielzahl von Anschlussbohrungen gleichzeitig mit Druckluft versorgt werden müssen. Damit entstehen hohe Undichtheiten und ein relativ großer Druckluftverlust.

Es ist erforderlich, den einzelnen druckluftzuführenden Anschlussbohrungen Ventile zuzuordnen, was mit einem hohen Aufwand bezüglich der Herstellung und der Verwendung von Ventilen und deren Unterhalt verbunden ist.

Die Anordnung von Unterdruck erzeugenden Venturidüsen im Bereich des Fördergurtes erhöht die Herstellungskosten des Fördergurtes außerordentlich und macht diesen reparaturanfällig.

In einer anderen Druckschrift (DE 196 36 086 A1) wird unmittelbar an die Anschlussbohrungen über zugeordnete, gesteuerte Ventile Unterdruck angelegt, um so das zu formende Material an der Unterseite eines in Längsrichtung geförderten Trums anzusaugen und über eine gewisse Förderstrecke zu transportieren.

Die Zuführung von Unterdruck über eine Vielzahl von anzusteuernden Ventilen ist jedoch außerordentlich aufwändig und mit hohen Unterdruckverlusten verbunden.

Mit der Druckschrift US 4,495,746 A wird eine Verpackungsvorrichtung zur Trennung von fortlaufenden Zuschnitten auf eine vorgesehene Länge von einer durchgängigen Bahn offenbart, welche dünnes, empfindlich gewickeltes Material aufweist und zur einzelnen Förderung der Zuschnitte in Folge zu einer Verpackungsstation, welche einen rotierenden Antrieb aufweist, eine perforierte Saugtrommel, Verteilermittel zur Verteilung der Bahn zur Saugtrommel, querverlaufende Trennmittel, welche wirksam mit der Saugtrommel zum Schneiden der Bahn in aufeinander folgenden Zuschnitte verbunden ist, Mittel zur Anwendung eines Vakuums auf einer äußeren Oberfläche der Saugtrommel über einen vorbestimmten umfänglichen Bewegungsbereich zur förmlichen Fixierung der Bahn und Zuschnitte darauf im ganzen Bereich, ein Zuschnitt-Fördermittel, welches zwischen der Saugtrommel und der Verpackungsstation angeordnet ist und ein Paar schräg beabstandete, parallel, endlos, allgemein drehend angetriebene, perforierte Bänder aufweist und einzelne obere und untere, parallel-axiale Umlenkrollen, welche die Bänder halten, und Saugmittel, welche hinter den Bändern entlang der Fördermittelführung zur Anwendung eines Vakuums und zur förmlichen aber lösbaren Fixierung der Bänder durch die Führungen, wobei die Saugtrommel derart befestigt ist, dass ein Führungsendteil auf dem Umfangsbereich in Rotationsrichtung an einem hinteren Endteil der Fördermittelführung der Bänder angrenzt, um das sichere und konstante Zurückhalten der Zuschnitte ohne Deformation während der Überführung von den Trommeln zu den Bändern zu gewährleisten, und wobei die Verpackungsstation zwischen der Trommel und den Bändern in einem Überführungsbereich ausreichend angeordnet ist, wobei die hinteren Enden von einigen Zuschnitten den Übergangsbereich verlassen haben bevor zentrale Teile der Zuschnitte die Verpackungsstation erreichen.

Diese Erfindung weist den Nachteil auf, dass die Ausbildung der Umlenkrolle als Luftverteiler mit lüftschlüssiger Verbindung zum Förderband dieser nicht zu entnehmen ist.

Der Erfindung liegt deshalb die Aufgabe zugrunde, einen Vakuumförderer der eingangs genannten Art so weiterzubilden, dass eine wesentlich einfachere und verlustärmere Zufuhr von Überdruck- oder Unterdruckluft in den Bereich von einem Fördergurt erfolgen kann.

Die gestellte Aufgabe wird durch die Merkmale des Anspruches 1 gelöst.

Wesentliches Merkmal der Erfindung ist, dass mindestens eine Umlenkrolle des Bandförderers als Luftverteiler ausgebildet ist, über den die Luft in axialer Richtung eingespeist und in radialer Richtung über radial angeordnete Kanäle an die Unterseite des Fördergurtes herangeführt wird und dort in luftschlüssiger Verbindung zu den Fördergurt durchsetzenden Anschlussbohrungen kommt, über welche die Luft in die Saugblöcke eingeführt wird.

Vorzugsweise sind die Saugblöcke fest mit dem Fördergurt verbunden und die in die Saugblöcke hineinführenden Anschlussbohrungen werden also beim Umlaufen über den als Umlenkrolle ausgebildeten Luftverteiler in luftschlüssiger Verbindung mit den im Luftverteiler angeordneten, radialen Zuführbohrungen gebracht.

Damit besteht der Vorteil, dass auf insgesamt eine Ventilsteuerung verzichtet werden kann, denn es wird eine luftschlüssige Verbindung zwischen der Druckluft- oder der Saugluftquelle im Luftverteiler und den fest mit dem Fördergurt verbundenen Saugblöcken hergestellt, und zwar dann, wenn die Saugblöcke zusammen mit dem Fördergurt über die Umlenkrolle laufen.

Die Erfindung ist demzufolge nicht auf die Zuführung von Druckluft aus einem Luftverteiler in Saugblöcke beschränkt, sondern es kann in einer anderen Ausgestaltung vorgesehen sein, dass statt der Druckluft auch Saugluft zugeführt wird.

Im erst genannten Fall (Zuführung von Druckluft) ist es in einer Weiterbildung der Erfindung vorgesehen, dass die Unterdruck erzeugenden Organe in den Saugblöcken selbst angeordnet sind und die dort eingeführte Druckluft in eine Saugluft umgewandelt wird.

In dem anderen Ausführungsbeispiel, bei dem unmittelbar Saugluft über den Luftverteiler in die Saugblöcke zugeführt wird, ist es hingegen vorgesehen, dass die Unterdruck erzeugenden Organe entfallen und die Saugluft unmittelbar in den Saugblöcken der Ansaugstelle (Ansaugmuschel) zugeführt wird, um so das Fördergut zu transportieren.

In allen beiden Ausführungsbeispielen ist demzufolge wichtig, dass auf eine aufwändige Ventilsteuerung verzichtet werden kann, weil die gesteuerte Zu- oder Abführung von Luft im Bereich des Luftverteilers erfolgt, der erfindungsgemäß als Umlenkrolle ausgebildet ist.

Im folgenden Ausführungsbeispiel wird aus Vereinfachungsgründen lediglich die Zuführung von Druckluft über den erfindungsgemäßen Luftverteiler beschrieben, obwohl die Erfindung - wie oben dargelegt - nicht darauf beschränkt ist. Die Beschränkung erfolgt deshalb nur aus Vereinfachungsgründen und die Erfindung soll sich sowohl auf die Zuführung von Druckluft als auch auf die Zuführung von Saugluft erstrecken.

In einer Weiterbildung der Erfindung ist es zwecks Einsparung von Druckluft vorgesehen, dass es eine Rückführung der Druckluft gibt und hierbei der Fördergurt oder ein mit dem Fördergurt mitgeführter Kanal als Druckluft oder Saugluftspeicher ausgebildet ist.

In einer bevorzugten Ausgestaltung dieses Ausführungsbeispieles ist es vorgesehen, dass im Gurtkörper des Fördergurtes ein in Längsrichtung verlaufender Luftkanal angeordnet ist, in dem entweder Druckluft oder Saugluft gespeichert wird.

Dieser Luftkanal ist nur stellenweise an der Stelle, wo Saugblöcke vorhanden sind, über entsprechende Querbohrungen luftschlüssig mit dem zugeordneten Saugblock verbunden.

Gleichzeitig stellt der Saugblock jedoch auch die luftschlüssige Verbindung zu der Anschlussbohrung her, welche den Fördergurt durchsetzt und welche im Bereich des Luftverteilers mit der erfindungsgemäßen Zuführung von Druck- oder Saugluft in luftschlüssige Verbindung kommt.

In allen Anwendungsfällen ist es vorgesehen, dass im Bereich der Anschlussbohrung eine Rückschlagventil angeordnet ist, um ein unerwünschtes Zurückfließen der zugeführten Luft in den Luftverteiler zu verhindern.

Selbstverständlich ist die Erfindung nicht darauf beschränkt, dass der Saugblock auch unmittelbar zur Förderung des Fördergutes bestimmt ist. Es kann in manchen Fällen vorgesehen sein, dass abwechselnd jeweils ein Saugblock und ein sogenannter "Leerblock" auf dem Fördergurt angeordnet sind, wobei lediglich der Saugblock zur Förderung des Fördergutes dient, während der Leerblock die Verbindung zwischen der den Fördergurt senkrecht durchsetzenden Anschlussbohrung und den im Fördergurt angeordneten Luftkanal herstellt.

Der Leerblock dient dann zur gesteuerten Versorgung des Luftkanals im Fördergurt.

Es ist jedoch nicht lösungsnotwendig, den Luftkanal im Fördergurt selbst zu integrieren. In einer anderen Ausgestaltung kann es vorgesehen sein, dass der Luftkanal als getrennter Schlauch auf dem Fördergut befestigt ist und über entsprechende Anschlussbohrungen jeweils luftschlüssig mit dem daran ansetzenden Saugblock oder dem Leerblock verbunden ist.

Mit der gegebenen technischen Lehre werden mehrere Vorteile erzielt:
1. Durch die gezielte Vakuumerzeugung in den Saugblöcken wird weniger Druckluft verbraucht.
2. Die in den Saugblöcken eingesetzten Venturidüsen können für jeden Einsatzfall ausgewählt werden, so dass wiederum Druckluft eingespart wird.
3. Auf der nicht benötigten Seite des Vakuumförderers (Leertrum) werden die Druckluftkanäle in Richtung zur Venturidüse geschlossen, was mit einer wesentlichen Druckluftersparnis verbunden ist.
4. Es erfolgt eine leckagefreie Druckluftversorgung durch die erfindungsgemäße spezielle Drehdurchführung und durch die Einspeisung in einen umlaufenden Druckluft- oder Saugluftspeicher.
5. Die Druck- oder Sauglufteinspeisung erfolgt von dem Luftverteiler in die Vakuum- oder Überdruckeinheiten über Bohrungen in den als Zahnriemen ausgebildeten Gurt.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert gezeichnete Seitenansicht eines Vakuumförderers nach der Erfindung;
- Figur 2:: die Draufsicht auf den Vakuumförderer mit Darstellung seitlicher Abschaltelemente;
- Figur 3:: Schnitt durch den Gurtförderer;
- Figur 4:: Draufsicht auf die Anordnung nach Figur 3;
- Figur 5:: eine erste Ausführungsform eines Luftverteilers;
- Figur 6:: der Schnitt durch den Luftverteiler in Richtung des Pfeils A-A in Figur 5;
- Figur 7:: ein Schnitt durch eine abgewandelte Form eines Luftverteilers;
- Figur 8:: ein Luftverteiler nach Figur 7 im Schnitt mit Darstellung weiterer Einzelheiten;
- Figur 9:: perspektivische Seitenansicht eines Luftverteilers nach Figur 7 und 8.

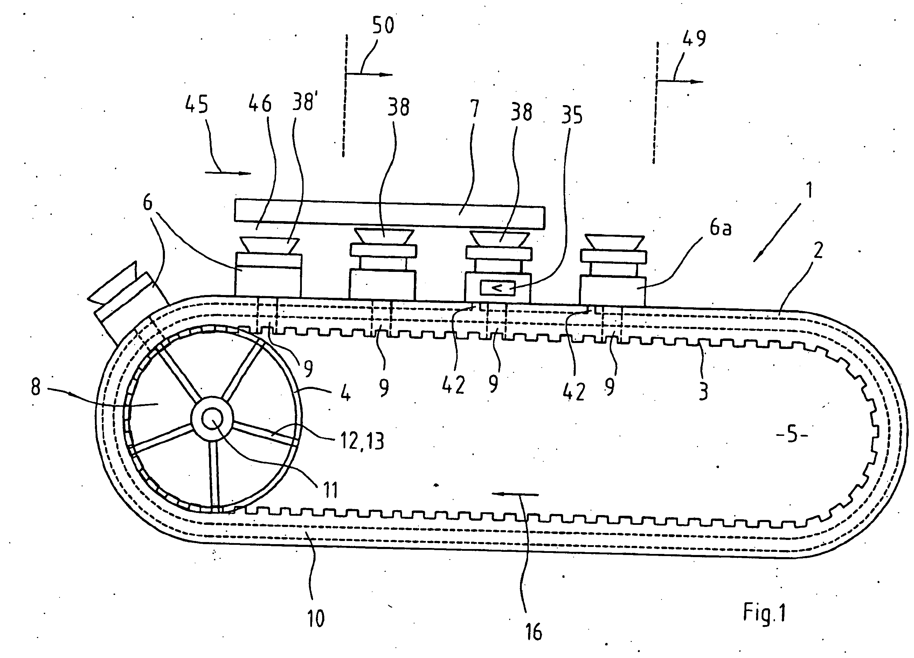

Der in Figur 1 dargestellte Bandförderer 1 besteht im wesentlichen aus einem Fördergurt 2, der bevorzugt als Zahnriemen ausgebildet ist und eine unten liegende Verzahnung 3 aufweist. Hierauf ist die Erfindung jedoch nicht beschränkt, die Verzahnung 3 kann auch entfallen.

Als Beispiel ist gezeigt, dass der Fördergurt 2 über zwei im Abstand voneinander angeordnete Umlenkrollen 4, 5 umgelenkt ist, von denen mindestens eine angetrieben ist. Aus Vereinfachungsgründen ist die zweite Umlenkrolle 5 nicht zeichnerisch dargestellt.

Auf der Oberseite des Fördergurtes 2 sind im Abstand voneinander angeordnete Saugblöcke 6 luftschlüssig und fest mit dem Fördergurt 2 verbunden, wobei die Saugblöcke 6 geeignet sind, ein Fördergut 7, welches in Pfeilrichtung 45 seitlich herangeführt wird, über eine gewisse Förderstrecke (in Pfeilrichtung 16) zwischen den Positionen 50 und 49 zu transportieren.

Zu diesem Zweck ist es vorgesehen, dass die Saugblöcke 6 heb- und senkbar ausgebildet sind und sich im gezeigten Ausführungsbeispiel an die Unterseite des Fördergutes 7 anlegen und hierbei mit dem Oberteil 38 und der dort angeordneten Saugmuschel sich luftschlüssig an der Unterseite des Fördergutes 7 anlegen und dieses ansaugen und mitnehmen.

Bei der Abgabestation (Position 49) senkt sich das Oberteil 38 wieder ab, gleichzeitig wird der Unterdruck entfernt und das Fördergut wird bei Position 49 wieder von der Förderstrecke entfernt.

Wichtig ist nun, dass mindestens eine der Umlenkrollen 4, 5 als Luftverteiler 8 ausgebildet ist, über den die Druckluft oder die Saugluft zugeführt wird.

Wie im allgemeinen Teil angegeben, bezieht sich das vorliegende Ausführungsbeispiel der Vereinfachung wegen nur auf eine Druckluftzuführung.

Hierbei wird die Druckluft im Bereich des Drehzentrums 11 zugeführt und über die als Speichen 12 ausgebildeten Kanäle 13 an die Unterseite des Fördergurtes 2 herangeführt, wo die Druckluft in dort angeordnete Anschlussbohrungen 9 in den jeweiligen Saugblock 6 eingeführt wird.

Bei der Verwendung von Druckluft muss deshalb im Bereich des Saugblockes 6 ein Unterdruckerzeuger 35 angeordnet werden, der bevorzugt eine Venturidüse aufweist.

Die aus dem Überdruckteil des Unterdruckerzeugers 35 herausströmende Druckluft wird entweder abgeblasen und entströmt in die Atmosphäre oder sie wird - wenn sie nicht benötigt wird - abgeschaltet und strömt dann über zugeordnete Rückführungsbohrungen (Abzweigbohrungen 42) in einen mit dem Fördergurt 2 verbundenen Luftkanal 10, der sich über die gesamte Länge des Fördergurtes 2 erstreckt.

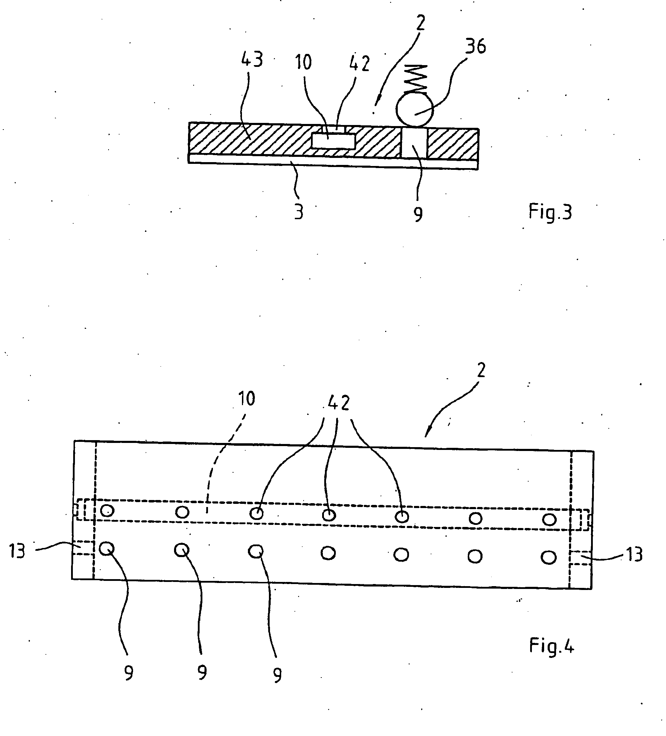

Lediglich als Ausführungsbeispiel ist in Figur 3 dargestellt, dass der Luftkanal 10 im Gurtkörper 43 des Fördergurtes 2 integriert ist.

Hierauf ist die Erfindung jedoch nicht beschränkt. Es kann auch vorgesehen sein, dass der Luftkanal 10 als getrennter Luftschlauch auf der Oberseite des Fördergurtes 2 angeordnet ist und die entsprechend stückweise angeordneten Abzweigbohrungen 42 luftschlüssig mit den zugeordneten, dort ansetzenden Saugblöcken 6 verbunden sind.

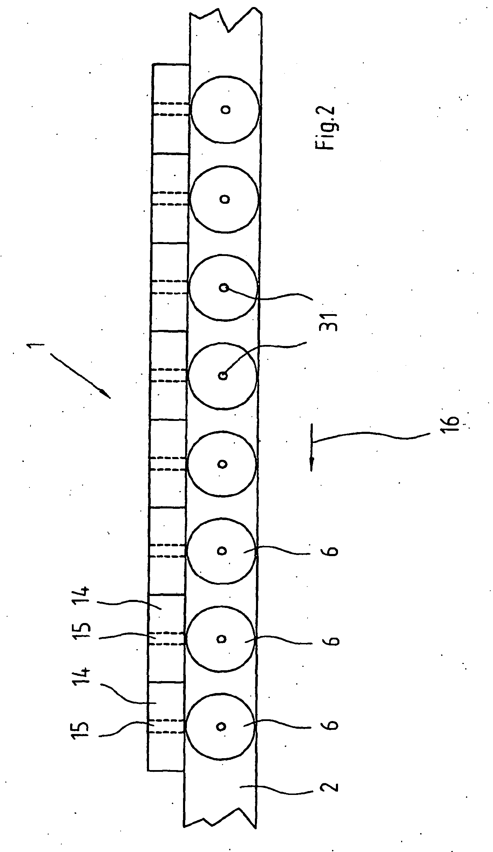

Zur weiteren Einsparung von Druckluft kann es gemäß Figur 2 vorgesehen sein, dass die Abluftbohrungen des Unterdruckerzeugers gesteuert durch jeweils ein Abschaltelement 14 verschließbar sind. Hierbei kann das Abschaltelement 14 als Verschlussblock ausgebildet werden, um so gesteuert die Ausblasbohrung der Venturidüse zu verschließen, wodurch sofort der Unterdruck zusammenbricht und jenseits der Position 49 eine weitere Unterdruckförderung nicht mehr erfolgt.

Dies bedeutet, dass lediglich im Bereich der Förderstrecke zwischen Position 50 und 49 ein Druckluftverbrauch stattfindet, während in allen anderen Bereichen die Abluftbohrung der Venturidüse gesteuert durch entsprechend zugeordnete Ventilelemente (Hubhülse im Körper des Saugblocks) verschlossen wird.

In Figur 2 ist als weiteres Ausführungsbeispiel für ein Abschaltelement ein Abschaltelement in der Form dargestellt, dass dort ein Druckluftkanal 15 vorgesehen ist, über den gesteuert Druckluft (Gegenluft) in die Ausblasbohrung der Venturidüse zugeführt wird. Auch in diesem Fall der Zuführung von Gegenluft bricht sofort die Unterdruckerzeugung zusammen und das geförderte Gut wird von der Saugmuschel sofort abfallen.

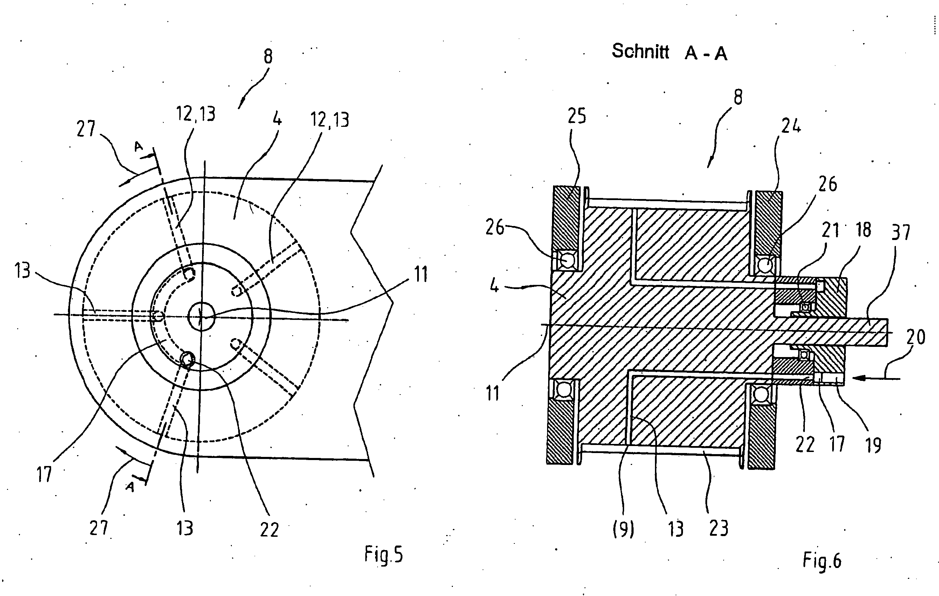

Ein Luftverteiler 8 in einer ersten Ausführungsform wird nun anhand der Figuren 5 und 6 näher beschrieben.
Hierbei ist vorgesehen, dass die Druckluft über das Drehzentrum 11 zugeführt wird, und zwar in Pfeilrichtung 20 in einen zugeordneten Einlass 19, der im Bereich eines stehenden Teils 18 angeordnet ist.

Der drehfest mit der Umlenkrolle 4 verbundene und ein Teil bildende Achsstummel 37 ragt durch das stehende Teil 18 hindurch. Auf dem stehenden Teil 18 ist der feste Teil eines Kugellagers 21 gelagert, dessen drehbarer Teil einen Ansatz mit der Anschlussbohrung 22 aufnimmt. Der Ansatz ist mit der Umlenkrolle 4 drehfest verbunden.

Die Umlenkrolle 4 ist hierbei zwischen zwei feststehenden Seitenplatten 24, 25 drehend über Kugellager 26 aufgenommen.
Der Außenumfang der sich drehenden Umlenkrolle 4 weist eine Verzahnung 23 auf.
Die nun über den Einlass 19 eingespeiste Druckluft gelangt in einen Verteilerkanal 17, der etwa halbmondförmig umläuft und über einen Anschlusswinkel 27 von etwa 160° geöffnet ist.

Die Druckluft gelangt nun in luftschlüssige Gegenüberstellung zu der umlaufenden Anschlussbohrung 22 mit dem dahinter angeordneten Kanal und gelangt somit in den Bereich von senkrecht davon abzweigenden Kanälen 13, die radial nach außen gerichtet sind und deren Mündung jeweils in Gegenüberstellung zu der Anschlussbohrung 9 mit des fest darauf aufsitzenden und abdichten befestigten Saugblockes 6 kommt.

Dies bedeutet, dass im Bereich des Anschlusswinkels 27, z. B. gemäß Figur 5, insgesamt drei Kanäle 13 mit Druckluft versorgt werden und hierbei die Druckluft über die entsprechende Mündung des Kanals 13 in die zugeordnete Anschlussbohrung 9 am Saugblock 6 eingespeist wird, wobei hierbei das Rückschlagventil 36 entgegen der Kraft der Feder angehoben und damit geöffnet wird.

Sobald jedoch der Anschlussblock außerhalb des Bereiches des Anschlusswinkels 27 kommt, schließt sich das Rückschlagventil 36 automatisch, weil keine Druckluft mehr anliegt und die Druckluft bleibt dann in dem Luftkanal 10 gespeichert, weil im Bereich des Saugblockes 6 eine luftschlüssige Verbindung zwischen der Anschlussbohrung 9 und dem Luftkanal 10 vorhanden ist. Diese luftschlüssige Verbindung ist in Figur 1 angedeutet. Dort ist erkennbar, dass an der Unterseite des Anschlussblockes Abzweigbohrungen 42 vorhanden sind, die in zugeordnete Bohrungen in den Luftkanal 10 gemäß Figur 4 auf dem Fördergurt 2 münden.

Die Figur 1 zeigt als erstes Ausführungsbeispiel die Tatsache, dass bei der Zuführung von Druckluft ein Unterdruckerzeuger 35 im Bereich des Saugblockes 6 vorhanden ist.

Als davon abgewandeltes Ausführungsbeispiel wird ein Saugblock 6a dargestellt, bei dem der Unterdruckerzeuger 35 entfällt, weil unmittelbar schon Saugluft in den Saugblock 6 über den Luftverteiler 8 eingeführt wird und die Saugluft wird über die Abzweigbohrung 42 ebenfalls in den längs verlaufenden Luftkanal 10 eingeführt und dort gespeichert.

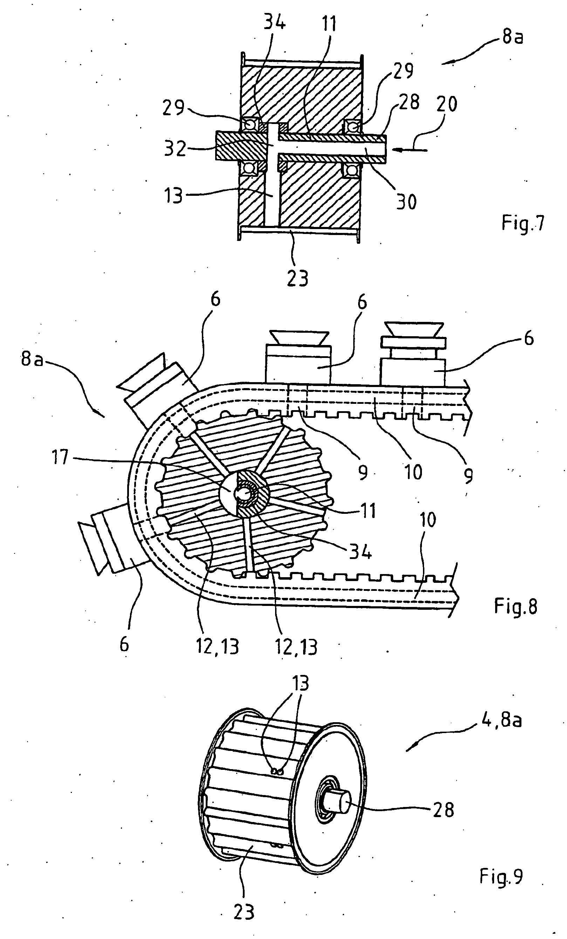

Die Figuren 7 bis 9 zeigen ein weiteres Ausführungsbeispiel eines Luftverteilers 8a, der einen vereinfachten Aufbau aufweist.

Über die stehende Anschlusshülse 28 wird die Druckluft in Pfeilrichtung 20 eingespeist und die Anschlusshülse trägt über Kugellager 29 drehbar den Rotatorenteil der Umlenkrolle 4, wobei die Luft aus der Anschlusshülse 28 in einem Querkanal 32 gelangt, von dem sie aus wiederum in den Kanal 13 und dessen Mündung in die Anschlussbohrung 9 am Saugblock 6 eingeleitet wird.

Als Ventilelement ist in diesem Ausführungsbeispiel ein Dichtelement 34 vorgesehen, welches gemäß Figur 8 wiederum nur über einen gewissen Anschlusswinkel von z. B. 120 bis 160° die Druckluftversorgung für die im Bereich der Umlenkung des Fördergurtes angeordneten Kanäle 13 sicherstellt.

Die druckluft- oder saugluftführende Bohrung 30 wird also nur gesteuert über einen gewissen Umfangswinkel mit den zugeordneten Kanälen 13 im Luftverteiler 8a luftschlüssig verbunden und nur in diesem Bereich wird Druck- oder Saugluft an die zugeordneten Saugblöcke 6, 6a zugeführt.

Die Saugluft wird schließlich über die oberen Saugkanäle 31 in den Oberseiten der Saugblöcke 6 an die Unterseite des Fördergutes 7 zugeführt.

Im gezeigten Ausführungsbeispiel nach Figur 9 münden die Kanäle 13 in zwei voneinander beabstandete Bohrungen, was jedoch nicht lösungsnotwendig ist. Es kann auch eine einzige Bohrung verwendet werden.

### Zeichnungslegende

- 1: Bandförderer
- 2: Fördergurt
- 3: Verzahnung
- 4: Umlenkrolle
- 5: Umlenkrolle
- 6: Saugblock 6a
- 7: Fördergut
- 8: Luftverteiler 8a
- 9: Anschlussbohrung
- 10: Luftkanal
- 11: Drehzentrum
- 12: Speicher
- 13: Kanal
- 14: Abschaltelement
- 15: Druckluftkanal
- 16: Pfeilrichtung
- 17: Verteilkanal
- 18: stehender Teil
- 19: Einlass
- 20: Pfeilrichtung
- 21: Kugellager
- 22: Anschlussbohrung
- 23: Verzahnung
- 24: Seitenplatte
- 25: Seitenplatte
- 26: Kugellager
- 27: Anschlusswinkel
- 28: Anschlusshülse
- 29: Kugellager
- 30: Bohrung
- 31: Saugkanal
- 32: Querkanal
- 33:
- 34: Dichtelement
- 35: Unterdruckerzeuger
- 36: Rückschlagventil
- 37: Achsstummel
- 38: Oberteil
- 39:
- 40:
- 41:
- 42: Abzweigbohrung
- 43: Gurtkörper
- 44:
- 45: Pfeilrichtung
- 46: Hubspiel
- 47:
- 48:
- 49: Position
- 50: Position

## Patentansprüche

1. Vakuumförderer mit drehender Luftzuführung zum Transport von plattenförmigen Werkstücken, wobei dieser als Bandförderer (1) mit einem Fördergurt (2) ausgebildet ist, welcher mittels zwei voneinander beabstandete und parallel zueinander verlaufenden Umlenkrollen (4, 5) drehend angetrieben ist und in dessen Längserstreckung hindurch querverlaufende Bohrungen angeordnet sind, durch welche Druckluft in zugeordnete und fest mit dem Fördergurt (2) verbundene Saugblöcke (6, 6a) eingeführt wird, **dadurch gekennzeichnet, dass** mindestens eine Umlenkrolle (4, 5) des Bandförderers (1) als Luftverteiler (8, 8a) ausgebildet ist, über den die Luft in axialer Richtung (20) eingespeist und in radialer Richtung über radial angeordnete Kanäle (13) an die Unterseite des Fördergurtes (2) herangeführt wird und dort in luftschlüssiger Verbindung zu den Fördergurt (2) durchsetzenden Anschlussbohrungen (9) kommt, über welche die Luft in die Saugblöcke (6, 6a) eingeführt wird.

2. Vakuumförderer mit drehender Luftzuführung nach Anspruch 1, **dadurch gekennzeichnet, dass** die Druckluft- oder die Saugluftquelle im Luftverteiler (8, 8a) mit den am Fördergurt (2) fest angeordneten Saugblöcken (6, 6a) eine luftschlüssige Verbindung aufweist, wenn die Saugblöcke (6, 6a) mit dem Fördergurt (2) über die Umlenkrolle (4, 5) laufen.

3. Vakuumförderer mit drehender Luftzuführung nach Anspruch 1 oder 2, **dadurch gekennzeichnet, dass** die Unterdruck erzeugenden Organe (35) in den Saugblöcken (6, 6a) selbst angeordnet sind und die dort eingeführte Druckluft in eine Saugluft umwandelt.

4. Vakuumförderer mit drehender Luftzuführung nach Anspruch 1 oder 2, **dadurch gekennzeichnet, dass** die Saugluft über den Luftverteiler (8, 8a) direkt den Saugblöcken (6, 6a) zugeführt wird und der Bandförderer (1) den Entfall der Unterdruck erzeugenden Organe aufweist.

5. Vakuumförderer mit drehender Luftzuführung nach einem der Ansprüche 1 bis 4, **dadurch gekennzeichnet, dass** der Bandförderer (1) eine Rückführung der Druckluft aufweist, wobei der Fördergurt (2) oder ein mit dem Fördergurt (2) mitgeführter Luftkanal (10) als Druck- oder Saugluftspeicher ausgebildet ist, welcher im Gurtkörper (43) des Fördergurtes (2) angeordnet ist und lediglich im Bereich der Saugblöcke (6, 6a) mittels entsprechender Abzweigbohrungen (42) eine luftschlüssige Verbindung mit dem zugeordneten Saugblock (6, 6a) aufweist.

6. Vakuumförderer mit drehender Luftzuführung nach einem der Ansprüche 1 bis 5, **dadurch gekennzeichnet, dass** der Saugblock (6, 6a) eine luftschlüssige Verbindung mit der den Fördergurt (2) durchsetzenden Anschlussbohrung (9) aufweist und im Bereich des Luftverteilers (8, 8a) mit der Zuführung der Druck- oder Saugluft eine luftschlüssige Verbindung aufweist.

7. Vakuumförderer mit drehender Luftzuführung nach einem der Ansprüche 1 bis 6, **dadurch gekennzeichnet, dass** im Bereich der Anschlussbohrung (9) ein Rückschlagventil angeordnet ist, welches ein unerwünschtes Zurückfließen der zugeführten Luft in den Luftverteiler (8, 8a) ausschließt.

8. Vakuumförderer mit drehender Luftzuführung nach einem der Ansprüche 5 bis 7, **dadurch gekennzeichnet, dass** der Saugblock (6, 6a) wechselweise als sogenannter "Leerblock" auf dem Fördergurt (2) angeordnet ist, wobei dieser eine Verbindung zwischen der den Fördergurt (2) senkrecht durchsetzenden Anschlussbohrung (9) und den im Fördergurt (2) angeordneten Luftkanal (10) aufweist und somit eine. Versorgungssteuerung des Luftkanals (10) im Fördergurt (2) ausbildet.

9. Vakuumförderer mit drehender Luftzuführung nach einem der Ansprüche 5 bis 8, **dadurch gekennzeichnet, dass** der Luftkanal (10) als ein vom Fördergurt (2) getrennt angeordneter Schlauch ausgebildet ist, welcher auf dem Fördergurt (2) befestigt ist und mittels entsprechender Anschlussbohrung (9) luftschlüssig mit dem daran ansetzenden Saugblock (6, 6a) verbunden ist.

10. Vakuumförderer mit drehender Luftzuführung nach einem der Ansprüche 1 bis 3 und 5 bis 9, **dadurch gekennzeichnet, dass** die Vakuumerzeugung in den Saugblöcken (6, 6a) ausgebildet ist und einen verminderten Verbrauch von Druckluft aufweist.

11. Vakuumförderer mit drehender Luftzuführung nach Anspruch 3, **dadurch gekennzeichnet, dass** das Unterdruck erzeugende Organ (35) als Venturidüse ausgebildet ist.

12. Vakuumförderer mit drehender Luftzuführung nach Anspruch 11, **dadurch gekennzeichnet, dass** die Druckluftkanäle (13) auf der nicht benötigten Seite des Bandförderers (1) in Richtung der Venturidüse geschlossen sind und die Einsparung von Druckluft ausbildet.

13. Vakuumförderer mit drehender Luftzuführung nach einem der Ansprüche 1 bis 12, **dadurch gekennzeichnet, dass** dieser eine leckagefreie Druckluftversorgung mittels einer Drehdurchführung und Einspeisung der Druckluft in einen umlaufenden Druckluft- und Saugluftspeicher (10, 12, 13) aufweist.

14. Vakuumförderer mit drehender Luftzuführung nach einem der Ansprüche 1 bis 13, **dadurch gekennzeichnet, dass** der Fördergurt als Zahnriemen mit einer nach innen gerichteten Verzahnung (23) ausgebildet ist, welcher an seiner äußeren Oberfläche zwischen der Verzahnung (23) Anschlussbohrungen (9) zur Einspeisung der Saug- oder Druckluft von dem Luftverteiler (8, 8a) in die Saugblöcke (6, 6a) aufweist.

## Claims

1. Vacuum conveyor with a rotating air supply for the transportation of plate-shaped tools, said conveyor being configured as a band conveyor (1) with a conveyor belt (2), which is driven in rotation by means of two deflection rollers (4, 5), which are spaced apart from one another and run parallel to one another, and in the longitudinal extension of which are arranged bores which extend therethrough transversely and through which compressed air is introduced into associated suction blocks (6, 6a) rigidly connected to the conveyor belt 2, **characterised in that** at least one deflection roller (4, 5) of the band conveyor (1) is configured as an air distributor (8, 8a), by means of which the air is fed in in the axial direction (20) and is brought in the radial direction by means of radially arranged channels (13) to the lower side of the conveyor belt (2) and enters into an air connection there with the connection bores (9) passing through the conveyor belt (2), by means of which bores the air is introduced into the suction blocks (6, 6a).

2. Vacuum conveyor with a rotating air supply according to claim 1, **characterised in that** the compressed air or the suction air source in the air distributor (8, 8a) has an air connection with the suction blocks (6, 6a) rigidly arranged on the conveyor belt (2) when the suction blocks (6, 6a) run with the conveyor belt (2) over the deflection roller (4, 5).

3. Vacuum conveyor with a rotating air supply according to claim 1 or 2, **characterised in that** the members (35) producing negative pressure are arranged in the suction blocks (6, 6a) themselves and the compressed air introduced there is converted into suction air.

4. Vacuum conveyor with a rotating air supply according to claim 1 or 2, **characterised in that** the suction air is supplied directly to the suction blocks (6, 6a) by means of the air distributor (8, 8a) and the band conveyor (1) has the members producing the elimination of the negative pressure.

5. Vacuum conveyor with a rotating air supply according to any one of claims 1 to 4, **characterised in that** the band conveyor (1) has a recirculation system for the compressed air, the conveyor belt (2) or an air channel (10) carried with the conveyor belt (2) being configured as a compressed or suction air store, which is arranged in the belt body (43) of the conveyor belt (2) and only has an air connection to the associated suction block (6, 6a) in the region of the suction blocks (6, 6a) by means of corresponding branch bores (42).

6. Vacuum conveyor with a rotating air supply according to any one of claims 1 to 5, **characterised in that** the suction block (6, 6a) has an air connection to the connection bore (9) passing through the conveyor belt (2) and, in the region of the air distributor (8, 8a), has an air connection to the supply of the compressed or suction air.

7. Vacuum conveyor with a rotating air supply according to any one of claims 1 to 6, **characterised in that** a check valve, which excludes the possibility of an undesired flowing back of the air supplied into the air distributor (8, 8a), is arranged in the region of the connection bore (9).

8. Vacuum conveyor with a rotating air supply according to any one of claims 5 to 7, **characterised in that** the suction block (6, 6a) is alternately arranged as a so-called "empty block" on the conveyor belt (2), said empty block having a connection between the connection bore (9) passing perpendicularly through the conveyor belt (2) and the air channel (10) arranged in the conveyor belt (2) and therefore forming a supply control of the air channel (10) in the conveyor belt (2).

9. Vacuum conveyor with a rotating air supply according to any one of claims 5 to 8, **characterised in that** the air channel (10) is formed as a hose arranged separately from the conveyor belt (2), which hose is fastened to the conveyor belt (2) and has an air connection to the suction block (6, 6a) arranged thereon by means of a corresponding connection bore (9).

10. Vacuum conveyor with a rotating air supply according to any one of claims 1 to 3 and 5 to 9, **characterised in that** the production of the vacuum is configured in the suction blocks (6, 6a) and has a reduced consumption of compressed air.

11. Vacuum conveyor with a rotating air supply according to claim 3, **characterised in that** the member (35) producing the negative pressure is configured as a Venturi tube.

12. Vacuum conveyor with a rotating air supply according to claim 11, **characterised in that** the compressed air channels (13) are closed on the side of the band conveyor (1) which is not required in the direction of the Venturi tube and produce a saving in compressed air.

13. Vacuum conveyor with a rotating air supply according to any one of claims 1 to 12, **characterised in that** it has a leak-free compressed air supply by means of a rotary feed-through and feeding of the compressed air into a rotating compressed air and suction air store (10, 12, 13).

14. Vacuum conveyor with a rotating air supply according to any one of claims 1 to 13, **characterised in that** the conveyor belt is configured as a toothed belt with teeth (23) directed inwardly, which on its outer surface between the teeth (23), has connection bores (9) for feeding the suction and compressed air from the air distributor (8, 8a) into the suction blocks (6, 6a).

## Revendications

1. Convoyeur à vide avec alimentation en air rotative pour le transport de pièces en forme de plaques, ce convoyeur étant conçu comme un convoyeur à bande (1) avec une courroie transporteuse (2) qui est entraînée en rotation à l'aide de deux poulies de renvoi (4, 5) espacées et parallèles et dans le sens longitudinal de laquelle sont disposés des perçages transversaux par lesquels de l'air comprimé est introduit dans des blocs d'aspiration (6, 6a) associés et solidaires de la courroie transporteuse (2),
**caractérisé en ce qu'**au moins une poulie de renvoi (4, 5) du convoyeur à bande (1) est conçue comme un distributeur d'air (8, 8a) par l'intermédiaire duquel l'air est introduit dans le sens axial (20), est amené sur la face inférieure de la courroie transporteuse (2) dans le sens radial grâce à des conduits (13) disposés radialement et, au niveau de ladite face inférieure, rejoint les perçages de raccordement (9) qui traversent la courroie (2) et grâce auxquels l'air est introduit dans les blocs d'aspiration (6, 6a).

2. Convoyeur à vide avec alimentation en air rotative selon la revendication 1, **caractérisé en ce que** la source d'air comprimé ou la source d'air d'aspiration prévue dans le distributeur d'air (8, 8a) communique avec les blocs d'aspiration (6, 6a) solidaires de la courroie transporteuse (2) lorsque les blocs d'aspiration (6, 6a) passent avec ladite courroie (2) sur la poulie de renvoi (4, 5).

3. Convoyeur à vide avec alimentation en air rotative selon la revendication 1 ou 2, **caractérisé en ce que** les organes (35) qui produisent une dépression sont disposés dans les blocs d'aspiration (6, 6a) eux-mêmes et transforment l'air comprimé introduit à cet endroit en air d'aspiration.

4. Convoyeur à vide avec alimentation en air rotative selon la revendication 1 ou 2, **caractérisé en ce que** l'air d'aspiration est amené directement dans les blocs d'aspiration (6, 6a) par le distributeur d'air (8, 8a), et les organes qui produisent la dépression sont supprimés sur le convoyeur à bande (1).

5. Convoyeur à vide avec alimentation en air rotative selon l'une des revendications 1 à 4, **caractérisé en ce que** le convoyeur à bande (1) comporte un recyclage de l'air comprimé, la courroie transporteuse (2) ou un conduit d'air (10) déplacé avec celle-ci étant conçu comme un réservoir d'air comprimé ou d'air d'aspiration qui est disposé dans le corps (43) de la courroie transporteuse (2) et qui ne communique avec le bloc d'aspiration associé (6, 6a) que dans la zone des blocs d'aspiration (6, 6a), grâce à des perçages de dérivation correspondants (42).

6. Convoyeur à vide avec alimentation en air rotative selon l'une des revendications 1 à 5, **caractérisé en ce que** le bloc d'aspiration (6, 6a) communique avec le perçage de raccordement (9) qui traverse la courroie transporteuse (2), et communique avec l'amenée de l'air comprimé ou de l'air d'aspiration dans la zone du distributeur d'air (8, 8a).

7. Convoyeur à vide avec alimentation en air rotative selon l'une des revendications 1 à 6, **caractérisé en ce qu'**il est prévu dans la zone du perçage de raccordement (9) un clapet antiretour qui empêche un reflux indésirable, dans le distributeur d'air (8, 8a), de l'air amené.

8. Convoyeur à vide avec alimentation en air rotative selon l'une des revendications 5 à 7, **caractérisé en ce que** le bloc d'aspiration (6, 6a) est disposé en alternance sous la forme de ce qu'on appelle un "bloc fictif" sur la courroie transporteuse (2), ce bloc comportant une liaison entre le perçage de raccordement (9) qui traverse la courroie transporteuse (2) perpendiculairement et le conduit d'air (10) qui est disposé dans ladite courroie (2), et formant ainsi une commande d'alimentation du conduit d'air (10) dans la courroie transporteuse (2).

9. Convoyeur à vide avec alimentation en air rotative selon l'une des revendications 5 à 8, **caractérisé en ce que** le conduit d'air (10) est conçu comme un tuyau qui est disposé séparément par rapport à la courroie transporteuse (2) et qui est fixé sur celle-ci et communique, à l'aide d'un perçage de raccordement (9), avec le bloc d'aspiration (6, 6a) rapporté sur ladite courroie.

10. Convoyeur à vide avec alimentation en air rotative selon l'une des revendications 1 à 3 et 5 à 9, **caractérisé en ce que** la production de vide est prévue dans les blocs d'aspiration (6, 6a) et présente une consommation réduite d'air comprimé.

11. Convoyeur à vide avec alimentation en air rotative selon la revendication 3, **caractérisé en ce que** l'organe (35) qui produit une dépression est conçu comme un venturi.

12. Convoyeur à vide avec alimentation en air rotative selon la revendication 11, **caractérisé en ce que** les conduits d'air comprimé (13), sur le côté du convoyeur à bande (1) dont on n'a pas besoin, sont fermés en direction du venturi et permettent une économie d'air comprimé.

13. Convoyeur à vide avec alimentation en air rotative selon l'une des revendications 1 à 12, **caractérisé en ce qu'**il comporte une alimentation en air comprimé sans fuite, à l'aide d'un passage rotatif et d'une introduction de l'air comprimé dans un réservoir d'air comprimé et d'air d'aspiration rotatif (10, 12, 13).

14. Convoyeur à vide avec alimentation en air rotative selon l'une des revendications 1 à 13, **caractérisé en ce que** la bande transporteuse est conçue comme une courroie dentée qui est pourvue d'une denture (23) dirigée vers l'intérieur et qui présente sur sa surface extérieure, entre les dents (23), des perçages de raccordement (9) pour l'introduction de l'air d'aspiration ou de l'air comprimé dans les blocs d'aspiration (6, 6a) grâce au distributeur d'air (8, 8a).
